# EUROPÄISCHE PATENTSCHRIFT

(11) **EP 1 197 383 B1**
(45) Veröffentlichungstag und Bekanntmachung des Hinweises auf die Patenterteilung: **25.10.2006**
(21) Anmeldenummer: 01119183.0
(22) Anmeldetag: 09.08.2001
(51) Int. Cl.: B60N 2/68, B60R 22/26, B60N 2/24, B60N 2/005

(54) **Sitz zum Einbau in Kraftfahrzeuge**
Seat for mounting in automotive vehicles
Siège à incorporer aux véhicules automobiles

(30) Priorität: 10.10.2000 DE 20017354 U
(43) Veröffentlichungstag der Anmeldung: 17.04.2002
(73) Patentinhaber: Franz Kiel GmbH & Co. KG, 86720 Nördlingen (DE)
(72) Erfinder: Mill, Juergen, 73479 Ellwangen (DE)
(74) Vertreter: Lorenz, Werner

(56) Entgegenhaltungen:
- EP-A- 0 739 773
- DE-A- 3 147 045
- DE-U- 8 335 442
- DE-U- 8 608 908
- US-A- 4 213 651
- US-A- 4 568 106

## Beschreibung

Die Erfindung betrifft einen Sitz zum Einbau in Kraftfahrzeuge nach der im Oberbegriff von Anspruch 1 näher definierten Art.

Aus der US-A-4 213 651 ist ein Sicherheitsgurtsystem für ein Kraftfahrzeug bekannt, bei welchem der Sicherheitsgurt durch einen Schlitz in einer senkrecht verlaufenden Abdeckung des Sitzrahmens verläuft. Die US-A-4 568 106 beschreibt ein Rückhaltesystem für einen Kraftfahrzeugsitz, bei dem der Rahmen ebenfalls einen Schlitz zur Durchführung des Gurts aufweist.

Bei anderen, aus dem allgemeinen Stand der Technik bekannten Lösungen wird oftmals der Sicherheitsgurt zwischen dem Verbindungselement und einem sich darunter befindlichen Fuß, auf welchem meist zwei derartige Sitze angebracht sind, hindurchgeführt. Zwar ist eine solche Konstruktion bei den meisten Ausführungen bzw. an den meisten Orten, an denen diese Sitze angebracht sind, einsetzbar, es ergeben sich jedoch insbesondere bei Omnibussen und ähnlichen Kraftfahrzeugen häufig Einbausituationen, in denen die Sitze nicht auf den oben erwähnten Fuß aufgesetzt werden, sondern beispielsweise auf der Heckbank, auf Radkästen, auf Toiletten oder dergleichen. In solchen Fällen sind häufig Sonderaufbauten erforderlich, um ein Unterbringen des Sicherheitsgurtes bei zugleich gewährleisteter Funktion zu ermöglichen.

Die beschriebenen Sonderkonstruktionen erfordern jedoch nicht nur vom Konstrukteur des jeweiligen Sitzes einen größeren Arbeitsaufwand, sondern bringen auch eine Erhöhung der Teilevielfalt und eine aufwendigere Montage mit sich und vergrößern darüber hinaus die Bauhöhe des Sitzes.

Es ist daher Aufgabe der vorliegenden Erfindung, einen Sitz zum Einbau in ein Kraftfahrzeug zu schaffen, welcher für die unterschiedlichsten Einbausituationen geeignet und bei dem die Führung des Sicherheitsgurtes problemlos bei zugleich sicherer Funktion möglich ist.

Erfindungsgemäß wird diese Aufgabe durch die in Anspruch 1 genannten Merkmale gelöst.

Durch den erfindungsgemäßen Schlitz in der seitlichen, wenigstens annähernd senkrecht verlaufenden Wandung des Verbindungselementes ergibt sich eine sehr genaue Führung für den Sicherheitsgurt, welcher durch die seitliche Anordnung des Schlitzes die Sitzfläche bzw. den Sitz auch in einem seitlichen Bereich verläßt. Hierdurch kann die bisher vorhandene Problematik, nämlich daß bei bestimmten Einbausituationen Sonderkonstruktionen erforderlich sind, um eine uneingeschränkte Bewegung und damit eine sichere Funktion des Sicherheitsgurtes zu gewährleisten, vermieden werden und es ergibt sich ein Sitz für ein Kraftfahrzeug, bei dem eine sichere Funktion des Sicherheitsgurtes völlig unabhängig von dem jeweiligen Einbau gegeben ist.

Mittels der erfindungsgemäßen Konstruktion kann gegenüber herkömmlichen Lösungen eine erhebliche Platzeinsparnis im Bezug auf die Bauhöhe erzielt werden, wodurch es möglich ist, den erfindungsgemäßen Sitz auch an Positionen einzubauen, an denen die Anbringung eines Sitzes, zumindest eines mit einem Sicherheitsgurt ausgestatteten Sitzes, bislang nicht möglich war. Ein weiterer Vorteil der erfindungsgemäßen Lösung ist die verminderte Reibung für den Sicherheitsgurt, da dieser in exakt definierter Weise durch den Schlitz geführt ist.

In einer vorteilhaften Weiterbildung der Erfindung kann vorgesehen sein, daß das Verbindungselement zwei seine Außenseiten bildende, wenigstens annähernd senkrecht verlaufende Wandungen aufweist, in welchen sich jeweils ein Schlitz befindet.

Ein derart ausgeführtes Verbindungselement kann in einem Kraftfahrzeug sowohl auf der rechten als auch auf der linken Seite eingesetzt werden und dient somit zur Einsparung von Fertigungsmitteln und vereinfacht darüber hinaus die Montage des erfindungsgemäßen Sitzes erheblich.

Um die Reibung des Sicherheitsgurtes noch weiter zu verringern, kann in einer weiteren vorteilhaften Ausgestaltung der Erfindung vorgesehen sein, daß der Schlitz mit einer Auskleidung zum Schutz des Sicherheitsgurtes versehen ist.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: eine perspektivische Ansicht des Verbindungselementes für den erfindungsgemäßen Sitz;
- Fig. 2: eine Seitenansicht des Verbindungselementes aus Fig. 1;

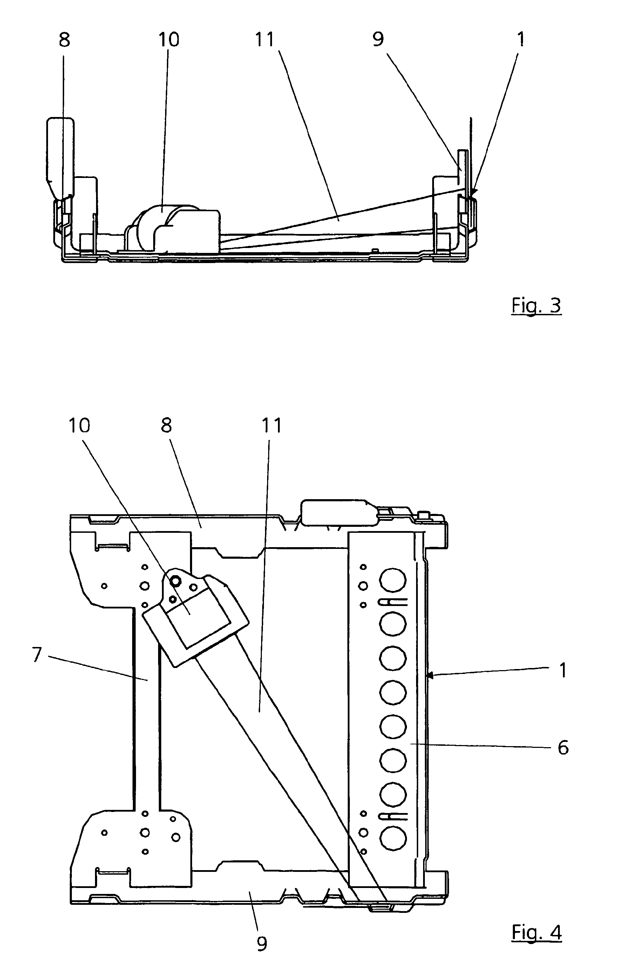

- Fig. 3: eine Vorderansicht des Verbindungselementes gemäß dem Pfeil III aus Fig. 2, und
- Fig. 4: eine Draufsicht auf das Verbindungselement gemäß dem Pfeil IV aus Fig. 2.

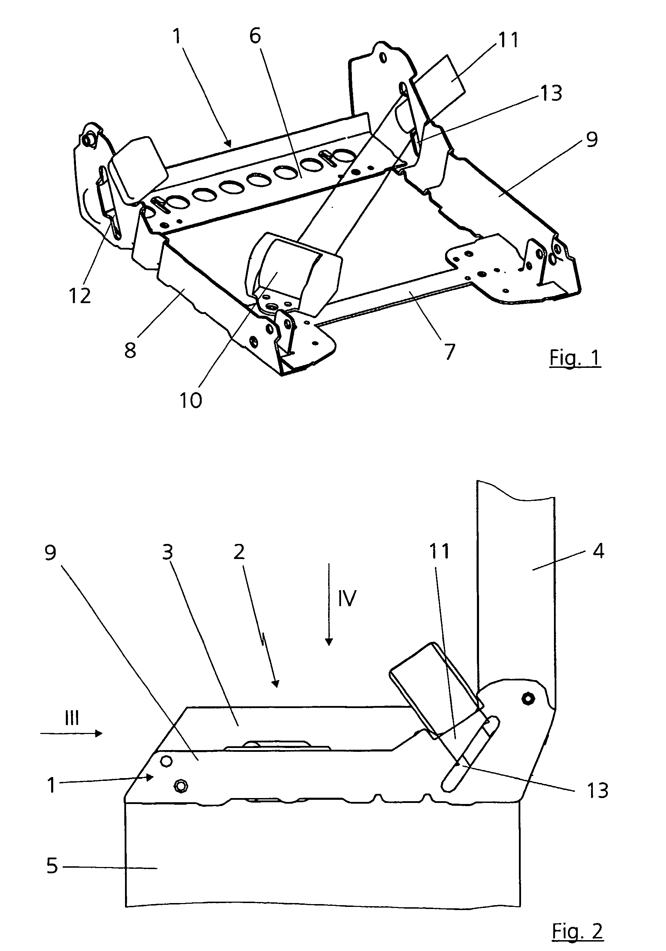

Fig. 1 zeigt ein Verbindungselement 1 für einen in seiner Gesamtheit nicht dargestellten Sitz 2, der zum Einbau in ein Kraftfahrzeug, vorzugsweise in einem Omnibus oder dergleichen, vorgesehen ist. Mit Hilfe des Verbindungselementes 1 werden eine lediglich in Fig. 2 schematisch dargestellte Sitzfläche 3 und eine Rückenlehne 4 miteinander verbunden. Unterhalb des Verbindungselementes 1 befindet sich ein ebenfalls in Fig. 2 schematisch dargestellter Fuß 5, der üblicherweise starr mit dem Kraftfahrzeug verbunden ist und an dem das Verbindungselement 1 angebracht ist.

Das Verbindungselement 1 besteht, um eine einfache Fertigung desselben zu ermöglichen, beispielsweise aus einem umgeformten Metallblech und weist zwei horizontal verlaufende Querstreben 6 und 7 auf, an denen jeweils beiderseits zwei die Außenseiten des Verbindungselementes 1 bildende, wenigstens annähernd senkrecht verlaufende Wandungen 8 und 9 angeordnet sind, die einteilig mit den Querstreben 6 und 7 ausgeführt sind. Die Rückenlehne 4 ist beiderseits an den beiden Wandungen 8 und 9 befestigt.

An der der Rückenlehne 4 abgewandten Querstrebe 7 ist in einem der Wandung 8 zugewandten Bereich ein Retraktor 10 für einen Sicherheitsgurt 11 befestigt. Alternativ wäre selbstverständlich auch eine Anbringung des Retraktors 10 an dem Fuß 5 möglich. Der Sicherheitsgurt 11 ist als Beckengurt ausgebildet und dient in bekannter Weise zum Schutz eines den Sitz 2 benutzenden Fahrzeuginsassen bei einem Unfall. Wie Fig. 1 und Fig. 2 zu entnehmen ist, weisen beide Wandungen 8 und 9 jeweils einen Schlitz 12 bzw. 13 auf, wobei durch den Schlitz 13 in der Wandung 9, die dem Retraktor 10 abgewandt ist, der Sicherheitsgurt 11 durchgeführt ist. Der Sicherheitsgurt 11 wird durch den Schlitz 13 von einem Bereich unterhalb der Sitzfläche 3 zu einem Bereich oberhalb der Sitzfläche 3 durchgeführt und kann im Bereich der Wandung 8 in ein nicht dargestelltes Gurtschloß eingeführt werden.

Um eine exakte Führung des Sicherheitsgurtes 11 innerhalb des Schlitzes 13 und eine gute Bedienbarkeit desselben zu erreichen, verläuft der Schlitz 13 gegenüber der Sitzfläche 3 erfindungsgemäß schräg. Eine noch bessere Führung, eine minimierte Reibung und ein besserer Schutz des Sicherheitsgurtes 11 kann erlangt werden, wenn der Schlitz 13 mit einer nicht dargestellten Auskleidung versehen ist, die beispielsweise aus Kunststoff bestehen kann.

Um den Sitz 2 an einer anderen Position innerhalb des Kraftfahrzeuges einsetzen zu können, z.B. auf der rechten statt auf der linken Seite des Fußes 5, kann in einfacher Weise der Retraktor 10 in dem der Wandung 9 zugewandten Bereich der Querstrebe 7 angebracht werden. In diesem Fall wird der Sicherheitsgurt 11 durch den Schlitz 12 in der Wandung 8 durchgeführt, wobei der Schlitz 12 mit Ausnahme seiner Lage identisch mit dem bereits oben beschriebenen Schlitz 13 ist.

## Patentansprüche

1. Sitz (2) zum Einbau in Kraftfahrzeuge, mit einer Sitzfläche (3), mit einer mit der Sitzfläche (3) über ein Verbindungselement (1) verbundenen Rückenlehne (4) und mit einem Sicherheitsgurt (11),
**dadurch gekennzeichnet, dass**
wenigstens eine wenigstens annähernd senkrechte, seitlich angeordnete Wandung (8,9) des Verbindungselementes (1) wenigstens einen Schlitz (12, 13) aufweist, durch welchen der Sicherheitsgurt (11) von einem Bereich unterhalb der Sitzfläche (3) zu einem Bereich oberhalb der Sitzfläche (3) durchgeführt ist, wobei der Schlitz (12,13) gegenüber der Sitzfläche (3) schräg verläuft.

2. Sitz nach Anspruch 1,
**dadurch gekennzeichnet, dass**
das Verbindungselement (1) zwei seine Außenseiten bildende, wenigstens annähernd senkrecht verlaufende Wandungen (8,9) aufweist, in welchen sich jeweils ein Schlitz (12,13) befindet.

3. Sitz nach Anspruch 2,
**dadurch gekennzeichnet, dass**
die Rückenlehne (4) an den beiden wenigstens annähernd senkrecht verlaufenden Wandungen (8,9) befestigt ist.

4. Sitz nach einem der Ansprüche 1 bis 3,
**dadurch gekennzeichnet, dass**
an dem Verbindungselement (1) ein Retraktor (10) für den Sicherheitsgurt (11) angebracht ist.

5. Sitz nach einem der Ansprüche 1 bis 4,
**dadurch gekennzeichnet, dass**
das Verbindungselement (1) aus Metallblech besteht.

6. Sitz nach einem der Ansprüche 1 bis 5,
**dadurch gekennzeichnet, dass**
der Schlitz (12,13) mit einer Auskleidung zum Schutz des Sicherheitsgurtes (11) versehen ist.

7. Sitz nach Anspruch 1 bis 6,
**dadurch gekennzeichnet, dass**
der Sicherheitsgurt (11) ein Beckengurt ist.

## Claims

1. Seat (2) for installation in motor vehicles, said seat having a seating surface (3), a backrest (4) connected to said seating surface (3) via a connecting element (1), and a safety belt (11),
**characterised in that** at least one, at least approximately perpendicular, laterally disposed wall (8, 9) of the connecting element (1) has at least one slot (12, 13) through which the safety belt (11) is guided from a region below the seating surface (3) to a region above said seating surface (3), said slot (12, 13) extending obliquely in relation to said seating surface (3).

2. Seat according to Claim 1,
**characterised in that** the connecting element (1) has two walls (8, 9) which form its outer sides and extend at least approximately perpendicularly and in each of which a slot (12, 13) is located.

3. Seat according to Claim 2,
**characterised in that** the backrest (4) is fastened to the two walls (8, 9) which extend at least approximately perpendicularly.

4. Seat according to one of Claims 1 to 3,
**characterised in that** a retractor (10) for the safety belt (11) is attached to the connecting element (1).

5. Seat according to one of Claims 1 to 4,
**characterised in that** the connecting element (1) consists of sheet metal.

6. Seat according to one of Claims 1 to 5,
**characterised in that** the slot (12, 13) is provided with a lining for protecting the safety belt (11).

7. Seat according to Claims 1 to 6,
**characterised in that** the safety belt (11) is a lap belt.

## Revendications

1. Siège (2) destiné à être monté dans des véhicules automobiles, comprenant une surface d'assise (3), un dossier (4), relié à la surface d'assise (3) par un élément de liaison (1), et une ceinture de sécurité (11),
**caractérisé en ce que**
au moins une paroi (8, 9) au moins approximativement verticale et disposée latéralement par rapport à l'élément de liaison (1) comporte au moins une fente (12, 13) à travers laquelle la ceinture de sécurité (11) est enfilée pour passer d'une région située au-dessous de la surface d'assise (3) à une région située au-dessus de la surface d'assise (3), la fente (12, 13) s'étendant obliquement par rapport à la surface d'assise (3).

2. Siège selon la revendication 1,
**caractérisé en ce que**
l'élément de liaison (1) comporte deux parois (8, 9) formant ses côtés extérieurs, qui s'étendent au moins à peu près verticalement, et dans chacune desquelles se trouve une fente (12, 13).

3. Siège selon la revendication 2,
**caractérisé en ce que**
le dossier (4) est fixé aux deux parois (8, 9) qui s'étendent au moins à peu près verticalement.

4. Siège selon l'une des revendications 1 à 3,
**caractérisé en ce que**
un enrouleur (10) pour la ceinture de sécurité (11) est fixé à l'élément de liaison (1).

5. Siège selon l'une des revendications 1 à 4,
**caractérisé en ce que**
l'élément de liaison (1) est réalisé en tôle métallique.

6. Siège selon l'une des revendications 1 à 5,
**caractérisé en ce que**
la fente (12, 13) est pourvue d'un revêtement pour la protection de la ceinture de sécurité (11).

7. Siège selon les revendications 1 à 6,
**caractérisé en ce que**
la ceinture de sécurité (11) est une ceinture de bassin.
